(19) Europäisches Patentamt
European Patent Office
Office européen des brevets

(11) **EP 1 111 333 A1**

(12) **EUROPEAN PATENT APPLICATION**
published in accordance with Art. 158(3) EPC

(43) Date of publication:
**27.06.2001 Bulletin 2001/26**

(51) Int Cl.⁷: **G01B 11/06**, G01J 3/10,
G01N 21/01

(21) Application number: **00940859.2**

(22) Date of filing: **28.06.2000**

(86) International application number:
**PCT/JP00/04228**

(87) International publication number:
**WO 01/01070 (04.01.2001 Gazette 2001/01)**

(84) Designated Contracting States:
**AT BE CH CY DE DK ES FI FR GB GR IE IT LI LU MC NL PT SE**
Designated Extension States:
**AL LT LV MK RO SI**

(30) Priority: **29.06.1999 JP 18355999**

(71) Applicant: **Omron Corporation**
**Kyoto-shi, Kyoto-fu, 600-8530 (JP)**

(72) Inventors:
• **TSUBAKIZAKA, Masazumi Omron Corporation**
**Shimogyo Kyoto Kyoto 600-8530 (JP)**
• **KIYOMOTO, Hironobu Omron Corporation**
**Shimogyo Kyoto Kyoto 600-8530 (JP)**
• **EGAWA, Koichi Omron Corporation**
**Shimogyo Kyoto Kyoto 600-8530 (JP)**

(74) Representative: **Kilian, Helmut, Dr.**
**Wilhelms, Kilian & Partner**
**Patentanwälte**
**Eduard-Schmid-Strasse 2**
**81541 München (DE)**

(54) **LIGHT SOURCE DEVICE, SPECTROSCOPE COMPRISING THE LIGHT SOURCE DEVICE, AND FILM THICKNESS SENSOR**

(57)    Light in a fluorescent light emission range having a central wavelength of 560 nm is fetched by transmitting light emitted from the white LED 12 through the dichroic mirror 14. Blue light having a central wavelength of 470 nm is fetched by reflecting light emitted from the blue LED 13 on the dichroic mirror 14. The rays of light from these LEDs 12, 13 are overlapped and emitted. Peaks of powers of the light from the white LED 12 having a wavelength of 560 nm and the light from the blue LED 13 having a wavelength 470 nm are made approximately equal by adjusting powers of the LEDs 12, 13.

*Fig.3*

EP 1 111 333 A1

## Description

TECHNICAL FIELD

The present invention relates to light source device using semiconductor light-emitting elements such as LEDs (light-emitting diodes) or the like and a spectroscope and a film-thickness sensor using the light source device.

BACKGROUND ART

(Conventional light source device)

In general, a halogen lamp is used as a white light source having a uniform output power in a wide emission wavelength range. The halogen lamp, however, has a short life and needs to be replaced frequently. Its heat generation may also affect the surroundings.

Therefore, a white light emitting LED having a uniform output power in a wide emission wavelength range is being required. In general, however, an emission wavelength range of an. LED itself is narrower than a visible light range. An LED generally used is a monochromatic light-emitting element in practical use.

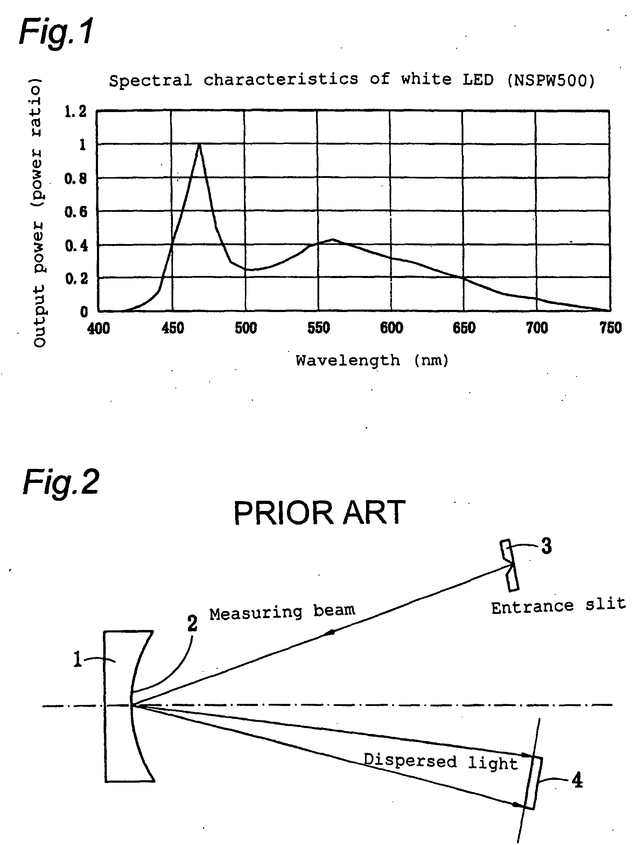

Consequently, being developed in an LED emitting white light as a whole (hereinafter, referred to as white LED), for example, by mounting a blue LED chip on a stem and adding fluorescent substances (fluorescent dye or fluorescent pigment) in a resin mold enclosing the LED chip as a coloring agent. Fig. 1 shows spectral characteristics of such a white LED. This was measured by using NSPW500 of Nichia Corporation. According to the graph of spectral characteristics in Fig. 1, this white LED has a high output peak (power ratio 1) around at a wavelength of 470 nm and a low output peak (power ratio 0.4) around at a wavelength of 560 nm, having a wide output wavelength range of about 450-700 nm. The output peak around at a wavelength of 470 nm is obtained by a blue light emitted from a blue LED chip. The output peak around at a wavelength of 560 nm is obtained by light whose wavelength is converted by a fluorescent substance.

However, due to the large non-uniformity in a power ratio (output power) against an emission wavelength as shown in Fig. 1 in such a white LED having these spectral characteristics, a white LED having uniform wavelength characteristics cannot be fabricated. When fluorescent substances are added in large quantities to increase the output peak around at a wavelength of 560 nm, the intensity of the LED chip itself is largely decreased or light emitted from the LED chip is blocked by fluorescent substances, thus making a practical use difficult. Therefore, it is difficult to obtain a light source having uniform output wavelength characteristics which can be used instead of a halogen lamp by using a conventional white LED

Even when only light having a wavelength of about 470 nm and a light having a wavelength of about 560 nm are used, the light having a wavelength of 560 nm has insufficient output power If output power of a blue light having a wavelength of 470 nm is appropriately adjusted. On the contrary, when output power of light having a wavelength of 560 nm in a fluorescent substance range is appropriately adjusted, the light having a wavelength of 470 nm outputs too large power. Therefore, output of a light-receiving element receiving the light having a wavelength of 470 nm is saturated.

(Conventional spectroscope)

A conventional spectroscope will be described below. Fig. 2 shows an example of a conventional spectroscope. A multiplicity of grooves are formed in a concave surface 2 of a concave diffraction grating 1 at fine pitches. When the concave diffraction grating 1 is irradiated with a measuring beam passing through a fine aperture of an entrance slit 3, the measuring beam separated by the concave diffraction grating 1 is received by a photodiode array 4 disposed at a predetermined position. Then, optical spectra of the measuring beam are measured.

However, in such a spectroscope, the aperture of the entrance slit needs to be made small to bring an incident light source near a point light source, thereby causing loss of a light quantity. Therefore, when an LED is used as a light source in this spectroscope, a problem arises that the light source power is reduced and thereby analysis accuracy is degraded due to deterioration of the S/N ratio.

(Conventional film-thickness sensor)

Conventionally known is a film-thickness sensor which measures a thin film thickness by utilizing interference and separation of light by a thin film. In the conventional film-thickness sensor, a halogen lamp is used as a light source.

However, when a film thickness not included in objects to be measured needs to be measured by the conventional film-thickness sensor, a halogen lamp having a different light emission wavelength range needs to be substituted depending on the thickness. Furthermore, when light having a specific wavelength needs to be cut depending on the kind of a thin film to be measured (for example, when a resist film thickness is measured in a semiconductor manufacturing process, an ultraviolet ray needs to be cut), a filter needs to be attached outside to cut the light having a specific wavelength.

Also, when a halogen lamp is thus replaced or a filter is removed and attached, thickness measuring conditions are changed. Furthermore, replacement of a halogen lamp or removal/attachment of a filter needs to be manually done. Therefore, much labor is required since new measuring and setting conditions need to be reinputted to an arithmetic unit of the film-thickness sensor each time after these works. If the reinput of measuring or setting conditions is forgotten, the film thickness cannot be accurately calculated.

DISCLOSURE OF THE INVENTION

The present invention was accomplished to solve the above-described technical problems. An object of the present invention is to provide a light source device capable of emitting light having uniform output power in a wide wavelength range. Another object of the present invention is to provide a spectroscope in which an S/N ratio is not deteriorated even when semiconductor light-emitting elements such as LEDs are used as a light source. Another object of the present invention is to provide a film-thickness sensor capable of measuring a film thickness by using semiconductor light-emitting elements as a light source and changing thickness measuring conditions easily.

A light source device according to Claim 1 is provided with a plurality of semiconductor light-emitting elements having different output wavelength characteristics, an optical element for fetching light in a partial wavelength range from each semiconductor light-emitting element and means for individually setting output power of each semiconductor light-emitting element. The light source device overlaps rays of light fetched from the respective semiconductor light-emitting elements and emits the light. Here, the output wavelength characteristics refer to the relationships between the wavelength of light outputted from a semiconductor light-emitting element such as an LED or the like and its output power.

According to the light source device of Claim 1, since rays of light in a partial wavelength range fetched from a plurality of semiconductor light-emitting elements having different output wavelength characteristics are overlapped, the light source device can have a wider output wavelength range by overlapping the rays of light in different wavelengths than a case where a single semiconductor light-emitting element is used. In particular, when semiconductor light-emitting elements having different peak positions in output wavelength characteristics are used and rays of light in a peak range of each semiconductor light-emitting element are overlapped, the output wavelength range can be widened while maintaining light use efficiency.

Furthermore, this light source device can adjust output power so as to be uniform in each wavelength range since the output power of each semiconductor light-emitting element can be individually set.

Also, since outputs of the semiconductor light-emitting elements are not simply overlapped, but rays of light in partial wavelength ranges are fetched and overlapped, not only a first peak range but also a second and after peak ranges in the output wavelength characteristics of a semiconductor light-emitting element can be utilized. Even when the second and after peak ranges are used, the output power does not become ununiform since the first peak range does not largely stick out.

Therefore, according to the light source device of Claim 1, a light source having a wide emission wavelength range and uniform output wavelength characteristics can be achieved by using semiconductor light-emitting elements such as LEDs.

The spectroscope according to Claim 2 is composed of a light source device according to Claim 1, a light-separating element for gradually changing a transmitted light wavelength depending on a transmitting position and a plurality of light-receiving elements for segmentally receiving light transmitted through the light-separating element.

The light source. device of Claim 1, which can have uniform output characteristics in a wide wavelength range, can be used as a light source of a spectroscope as described in Claim 2. Also, the wavelength of a transmitted light is gradually changed in the spectroscope according to Claim 2 depending on a transmitting position of the light-separating element and the transmitted light is segmentally received by a plurality of light-receiving elements. Therefore, a so-called point light source is not required as light source device. Thus, even when a light source device constituted by semiconductor light-emitting elements such as LEDs or the like is used, the light-separating element can be irradiated with a sufficient quantity of light and thereby a favorable S/N ratio can be obtained.

A film-thickness. sensor according to Claim 3 is provided with a light source device according to Claim 1, a light-separating element for gradually changing a transmitted light wavelength depending on a transmitting position and a plurality of light-receiving elements for segmentally receiving the light transmitted through the light-separating. element. Light emitted from the light source device and then reflected on a thin film or transmitted through the thin film is guided to the light-separating element. The thin film thickness is obtained based on an output of the light-receiving element.

The light source device of Claim 1, which can have uniform output characteristics in a wide wavelength range, can be used as a light source of a film-thickness sensor as described in Claim 3. Also, the wavelength of transmitted light is gradually changed depending on a transmitting position of the light-separating element and the transmitted light is segmentally received by a plurality of light-receiving elements in the film-thickness sensor to Claim 3. Therefore, a so-called point light source is not required as light source device. Thus, even when a light source device constituted by semiconductor light-emitting elements such as LEDs or the like is used, the light-separating element can be irradiated with a sufficient quantity of light and thereby a favorable S/N ratio can be obtained.

Furthermore, since the light source device of Claim 1 obtains a wide emission wavelength range by a plurality of semiconductor light-emitting elements, an emission wavelength range of the light source device can be made wider or narrower or the emission wavelength range can be shifted by turning on or off each semiconductor light-emitting element. Therefore, a light source does not need to be replaced depending on the film thickness to be measured unlike the case where a halogen lamp is used. The film thickness can be easily responded by turning on or off the semiconductor light-emitting elements. By turning off a semiconductor light-emitting element responsible for a medium wavelength range, light in this range can be removed. Therefore, the same effect as a filter can be obtained by turning on or off the semiconductor light-emitting elements. Thus, when the wavelength characteristics of the light source can be electrically controlled by turning on or off the semiconductor light-emitting elements, setting or measuring conditions can be automatically switched even in an arithmetic unit depending on a state of the light source device and thereby the film-thickness sensor can be easily handled.

BRIEF DESCRIPTION OF THE DRAWINGS

Fig. 1 is a graph showing output wavelength characteristics of a conventional white LED;

Fig. 2 is a schematic view of a constitution of a conventional spectroscope;

Fig. 3 is a conceptual view of a constitution of a light source device according to one embodiment of the invention;

Fig. 4 is a graph showing wavelength characteristics of transmissivity of a dichroic mirror used in the light source device and output wavelength characteristics of the light source device;

Fig. 5 is a conceptual view showing a constitution of a light source device according to another embodiment of the invention;

Fig. 6 shows wavelength characteristics of transmissivity of a dichroic mirror used in the light source device and output wavelength characteristics of the light source device;

Fig. 7 is a conceptual view showing a constitution of a spectroscope according to another embodiment of the invention;

Fig. 8 shows an optical filter used in the spectroscope and wavelength characteristics of transmissivity at a specific position;

Fig. 9 is a conceptual view showing a constitution of a film-thickness sensor according to another embodiment of the invention;

Fig. 10 is an explanatory view of an equation (Equation 1) representing transmissivity and shows how light is reflected on a thin film;

Fig. 11 shows optical spectra of interference light reflected on thin films each having a thickness of 800 nm and 1000 nm;

Fig. 12 an explanatory view of a curve fitting method;

Fig. 13 shows an example of a theoretical table of reflectance R against each value of a thin film thickness d and a light wavelength $\lambda$;

Fig. 14 is a flow chart showing procedures for the curve fitting method; and

Fig. 15 is an explanatory view of a peak search method.

BEST MODE FOR CARRYING OUT THE INVENTION

(First Embodiment)

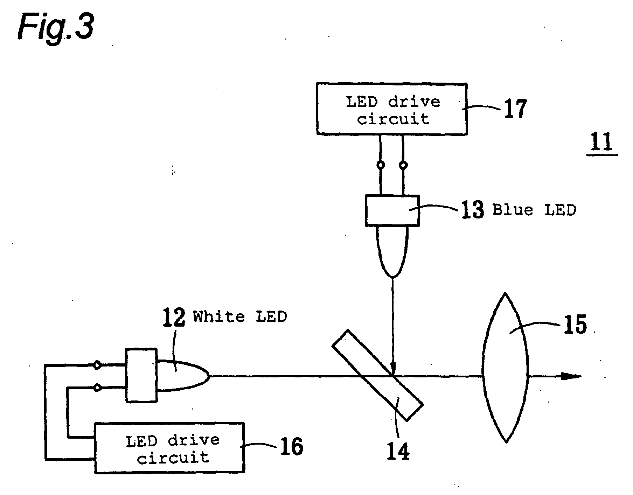

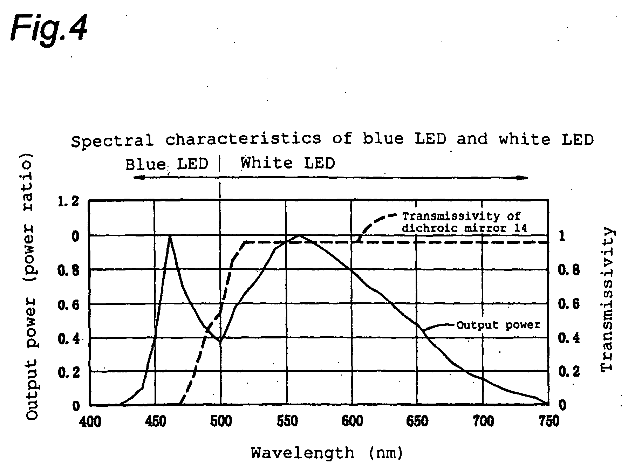

Fig. 3 is a conceptual view showing a constitution of a light source device 11 according to one embodiment of the invention. This light source device 11 is constituted by two LEDs 12, 13, one dichroic mirror 14 and a lens 15. The two LEDs 12, 13 have different output wavelength characteristics. Specifically, a white LED 12 (NSPW500: Nichia Corporation) having output wavelength characteristics shown in Fig. 1 and a blue LED 13 (for example, NSPB500: Nichia Corporation) having an output power peak at about 470 nm are used in this embodiment. The dichroic mirror 14 in use abruptly changes its transmissivity or reflectance at the center between feature wavelengths (wavelength when output power is near a peak or wavelength of light to be fetched and used) of the two LEDs 12, 13. In the dichroic mirror 14 used in this embodiment, the transmissivity abruptly changes in a wavelength range (about 470-520 nm) of around 500 nm. The transmissivity is approximately 1 in a wavelength range longer than this while the transmissivity is approximately 0 in a wavelength range shorter than this (see Fig. 4).

The white LED 12 and the blue LED 13 are disposed so that their respective optical axes are positioned at 45 degrees to the dichroic mirror 14 and that these optical axes are positioned at 90 degrees to each other. The center (optical axis) of lights emitted from the white LED 12 and transmitted through the dichroic mirror 14 and the center (optical axis) of light emitted from the blue LED 13 and reflected on the dichroic mirror 14 are disposed so as to coincide with each other. The lens 15 is disposed on these light centers (optical axes). Output powers of the white LED 12 and the blue LED 13 can be individually controlled by a white LED drive circuit 16 and a blue LED drive circuit 17, respectively. That is, output powers of the white LED 12 and the blue LED 13 are controlled by adjusting values of an applied voltage and current-limiting resistance by the white LED drive circuit 16 and the blue LED drive circuit 17.

Therefore, according to this light source device 11, the dichroic mirror 14 selectively transmits light having a wavelength of about 500 nm or longer out of light emitted from the white LED 12 and selectively reflects light having a wavelength of about 500 nm or shorter out of light emitted from the blue LED 13. Then, the light from the white LED 12 transmitted through the dichroic mirror 14 and the light from the blue LED 13 reflected on the dichroic mirror 14 are coupled. The coupled light rays are converged by the lens 15 or collimated and emitted to the outside. This light source device 11 is enclosed by a case so that the light from the white LED 12 reflected on the dichroic mirror 14 and the light from the blue LED 13 transmitted through the dichroic mirror 14 are absorbed by a light absorbing body (not shown) such as a black dye so as not to leak outside from the light source device 11 (case).

Fig. 4 shows wavelength characteristics of a transmissivity of a dichroic mirror used in the light source device and wavelength characteristics of output power outputted from the light source device. Light having a wavelength range shorter than about 500 nm out of the output wavelength characteristics is light in a blue range fetched from the blue LED 13. Light having a wavelength range longer than about 500 nm is light in a fluorescent light emission range fetched from the white LED 12. The output power of the white LED 12 and the output power of the blue LED 13 can be adjusted by the white LED drive circuit 16 and the blue LED drive circuit 17. Therefore, by adjusting outputs of the blue LED 13 and the white LED 12 so that output power by the blue LED 13 at a peak of about 470 nm and output power by the white LED 12 at a peak of about 560 nm become equal as output wavelength characteristics shown in Fig. 4, the light source device 11 emitting white light having uniform output power in a wide wavelength range can be achieved as compared with a case where a single white LED 12 is used. Also, according to the light source device 11, even when power in a fluorescent light emission range (central wavelength is about 560 nm) is made higher by the white LED 12, output in the blue range (central wavelength is about 470 nm) is not saturated.

Light from the white LED in a fluorescent light emission range is used as light in a range around 560 nm in this embodiment, but a green LED, a yellow LED or the like may be used. However, the light from the white LED in the fluorescent light emission range is preferable to obtain uniform characteristics since this light has a broad peak as compared with output wavelength characteristics of the green LED, the yellow LED or the like. Therefore, light from the blue LED having a peak broadened by dispersing fluorescent substances in a resin mold may be used.

(Second Embodiment)

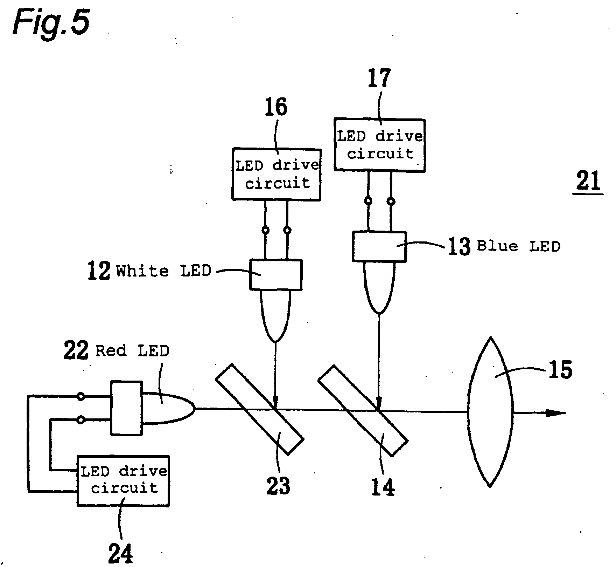

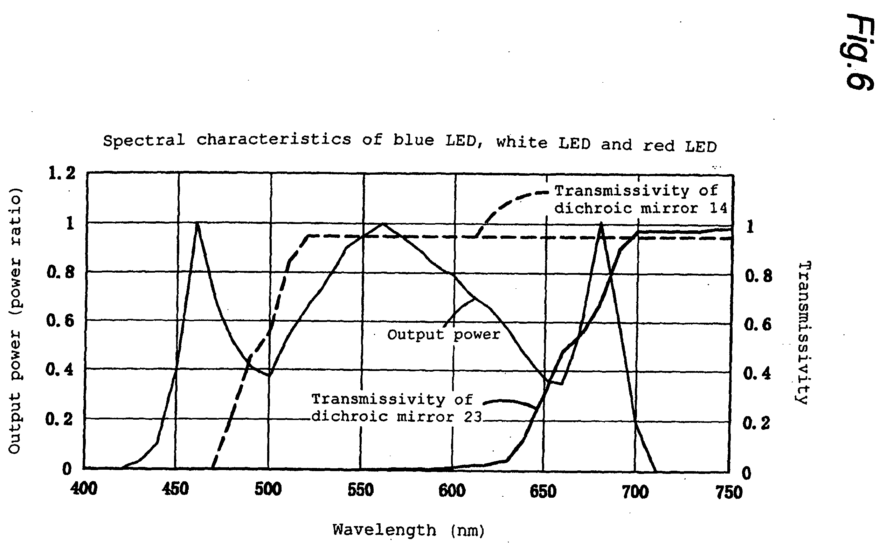

Fig. 5 is a conceptual view showing a constitution of a light source device 21 according to another embodiment of the invention. This light source device 21 is constituted by three LEDs 12, 13, 22, two dichroic mirrors 14, 23 and a lens 15. The three LEDs 12, 13, 22 have different output wavelength characteristics. Specifically, a white LED 12 (NSPW500: Nichia Corporation) having output wavelength characteristics shown in Fig. 1, a blue LED 13 (for example, NSPB500: Nichia Corporation) having an output peak at about 470 nm and a red LED 22 (for example, LN124W: Matsushita Electric Industrial Co., Ltd.) having an output peak at about 680 nm are used in this embodiment. The dichroic mirrors 14, 23 used abruptly change transmissivity or reflectance at the centers between feature wavelengths of the three LEDs 12, 13, 22. In the dichroic mirror 14 used in this embodiment, its transmissivity abruptly changes in a wavelength range (about 470-520 nm) of around 500 nm. The transmissivity is approximately 1 in a wavelength range longer than this while the transmissivity is approximately 0 in a wavelength range shorter than this. In the dichroic mirror 23, its transmissivity abruptly changes in a wavelength range (about 600-700 nm) of around 650 nm. The transmissivity is approximately 1 in a wavelength range longer than this while the transmissivity is approximately 0 in a wavelength range shorter than this (See Fig. 6).

In front of the red LED 22, the dichroic mirror 23, the dichroic mirror 14 and the lens 15 are disposed in this order from the closest to the red LED 22. The dichroic mirrors 23, 14 are disposed at 45 degrees to the optical axis of the red LED 22. The white LED 12 is disposed so that light is made incident to the dichroic mirror 23 from a direction at 90 degrees to the optical axis of the red LED 22. The blue LED 13 is disposed so that a light is made incident to the dichroic mirror 14 from a direction at 90 degrees to the to the optical axis of the red LED 22. Output powers of the red LED 22, the white LED 12 and the blue LED 13 can be individually controlled by a red LED drive circuit 24, a white LED drive circuit 16 and a blue LED drive circuit 17, respectively.

Therefore, according to this light source device 21, light emitted from the red LED 22 is transmitted through the dichroic mirrors 23, 14 so that the light in the red range having a central wavelength of about 680 nm is fetched. Light emitted from the white LED 12 is reflected on the dichroic mirror 23 and transmitted through the dichroic mirror 14 so that the light in a fluorescent light emission range having a wavelength range of about 500-650 nm is fetched. Light emitted from the blue LED 13 is reflected on the dichroic mirror 14 so that light in a blue range having a central wavelength of about 470 nm is fetched. Then, the fetched lights from the three LED 22, 12, 13 are overlapped and coupled into one.

Thus, in this light source device 21 as well, an output peak of about 470 nm by the blue LED 13, an output peak of about 560 nm by the white LED 12 and an output peak of about 680 nm by the red LED 22 can be made equal in height as shown in output wavelength characteristics of Fig. 6, by individually adjusting respective output powers of the red LED 22, the white LED 12 and the blue LED 13. Thus, the light source device 21 emitting white light having a further uniform output power in a wide wavelength range can be achieved.

As easily inferred from this embodiment, when the number of LEDs is increased to 4, power is made higher in a wavelength range where output power is low and a light source device having further uniform output power can be fabricated. Therefore, a light source having the same wavelength spectrum and light power as those of a halogen lamp can be obtained by combining a plurality of LEDs. As described later, a spectroscope and a film-thickness sensor, which are conventionally constituted by a halogen lamp, can be constituted by an LED light source.

(Third Embodiment)

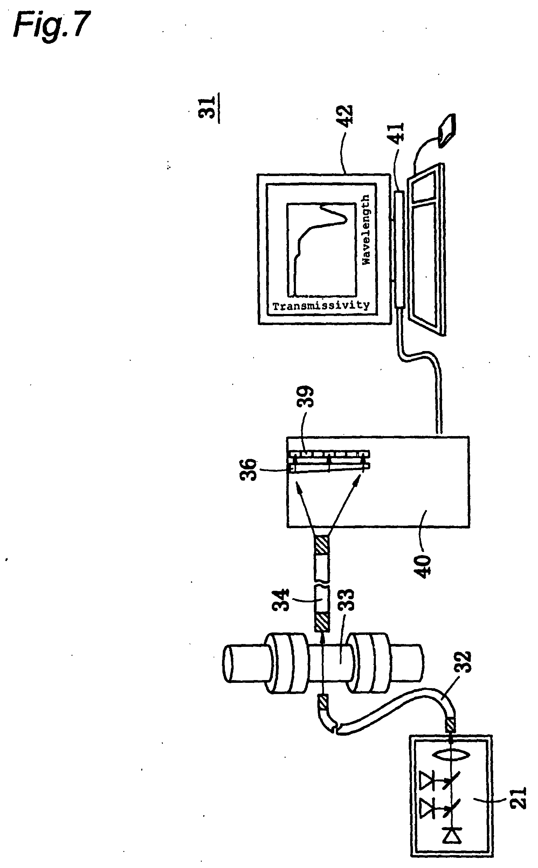

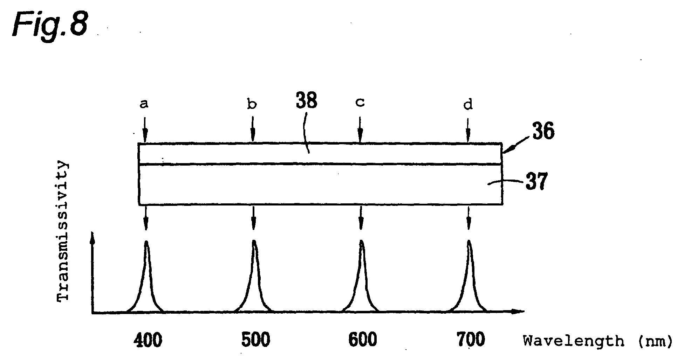

Fig. 7 is a conceptual view showing a constitution of a spectroscope 31 according to another embodiment of the invention. Fig. 8 is an explanatory view of an optical filter 36 (light-separating element) used in the spectroscope 31. The optical filter 36 shown in Fig. 8 is obtained by forming an optical multilayer film (multilayer gradient film) 38 whose transmission wavelength range continuously changes depending on an incident position on a surface of a transparent substrate 37 such as a glass substrate. Specifically, in this embodiment, the transmission wavelength characteristics of the optical multilayer film 38 are continuously changed by continuously changing an optical film thickness of each layer constituting the optical multilayer film 38 in a one-dimensional direction.

This will be described with reference to Fig. 8. Transmissivity of the optical multilayer film 38 at position a of the optical filter 36 has a peak at 400 nm as shown by an downward arrow ($\downarrow$). Similarly, transmissivities of the optical multilayer film 38 at positions b, c, d of the optical filter 36 have peaks at 500 nm, 600 nm and 700 nm, respectively, as shown by downward arrows ($\downarrow$). Therefore, when white parallel light rays are made incident to this optical filter 36, light having different wavelengths is continuously separated by the optical multilayer film 38 along the direction of the optical filter 36 length. For example, only wavelength components of 400 nm, 500. nm, 600 nm and 700 nm are extracted at positions a, b, c, d, respectively.

Therefore, light intensity at each wavelength can be detected by receiving light transmitted through this optical filter 36 at each position by a light-receiving unit 39 composed of a plurality of light-receiving elements such as line CCDs, two-dimensional CCDs, a photodiode array or the like. Since light made incident to the optical filter 36 does not need to use a point light source, the light quantity of the light source can be easily secured. Thus, even when LEDs are used as a light source, a light source device 21 having a favorable S/N ratio can be fabricated.

As shown in Fig. 7, the spectroscope 31 using this optical filter 36 is constituted by a light source device 21 (shown in Fig. 5) according to the present invention, an optical filter 36, a light-receiving unit 39 composed of CCDs and a computer 41 for processing data. When a test sample is a gas or liquid, the sample is sealed in a transparent sample holder (cylindrical chamber) 33. Rays of light in a wide wavelength range emitted from the light source device 21 are converged to an end surface of the optical fiber 32 on a projection side, guided towards the sample holder 33 through the inside of the optical fiber 32 and emitted to the sample holder 33 from the end of the optical fiber 32. An end surface of another optical fiber 34 is opposed to the end of the optical fiber 32 on the projection side with the sample holder 33 interposed therebetween. The light transmitted through the test sample in the sample holder 33 is received at the end surface of the optical fiber 34. The light received at the end surface of the optical fiber 34 is transmitted in the optical fiber 34 and emitted from the other end of the optical fiber 34 towards the optical filter 36. The light emitted towards the optical filter 36 is separated by the optical filter 36 and then the light intensity at each wavelength is measured by the light-receiving unit 39.

When spectral characteristics of the test sample are measured, white light is emitted from the light source device 21 in a state that the inside of the sample holder 33 is evacuated in advance. Then, the light transmitted through the optical filter 36 and received by the light-receiving unit 39 is stored in the computer 41. Subsequently, the test sample is sealed in the sample holder 33 and light intensity at each wavelength is measured by the light-receiving unit 39 under the same conditions. The computer 41 calculates changes in a transmissivity at each wavelength based on a distribution of light intensities when there is no test sample and a distribution of light intensities when the test sample is sealed in the sample holder 33 and displays the results in a format of a table or graph on a display 42. Thus, the composition, ingredient elements, concentration and the like of the test sample can be analyzed by obtaining changes in the distribution of wavelengths depending on whether the test sample is present or absent.

In the embodiment shown in Fig. 7, the optical filter 36 and the light-receiving unit 39 are mounted on an extended board 40 attached to an extended slot of the computer 41.

Since the light source device of the present invention can have uniform output (light emission) wavelength characteristics in a wide wavelength range, this light source device can be used in a spectroscope. Problems can be solved that the light source has a short life, heat generation affects surrounding equipment and the like as in the case where a halogen lamp is used. According to this light source device, the light source device has less change in light quantity and wavelength characteristics and is more stable than a halogen lamp.

(Fourth Embodiment)

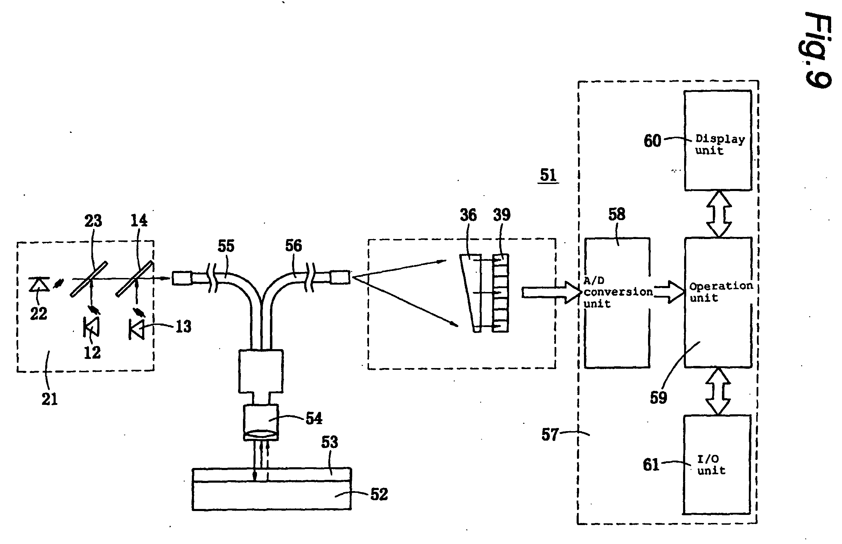

Fig. 9 is a conceptual view showing a constitution of a film-thickness sensor 51 according to another embodiment of the invention. This film-thickness sensor 51 is constituted by the light source device 21 shown in Fig. 5, a light projecting/receiving unit (objective lens) 54 for irradiating a thin film 53 to be measured on a substrate 52 with light from the light source device 21 and receiving the light reflected from the thin film 53, a optical fiber 55 (a optical fiber of a two-branch optical fiber) for guiding the light emitted from the light source device 21 to the light projecting/receiving unit 54, the light-receiving unit 39 shown in Fig. 7 composed of the optical filter 36 and CCDs or the like, a optical fiber 56 (the other optical fiber of the two-branch optical fiber) receiving the light reflected from the thin film 53 and guiding the light to the optical filter 36 and an arithmetic unit 57 for calculating the thin film 53 thickness.

As described wit reference to Fig. 5, the light source device 21 uses two dichroic mirrors 23, 14 to overlap and output light fetched from the red LED 22 having a central wavelength of about 680 nm, light fetched from the white LED 12 having a central wavelength of about 560 nm and light fetched from the blue LED 13 having a central wavelength of about 470 nm. Therefore, the thin film 53 formed on the substrate 52 surface is irradiated with white light having a wide wavelength range from about 400 nm to about 700 nm.

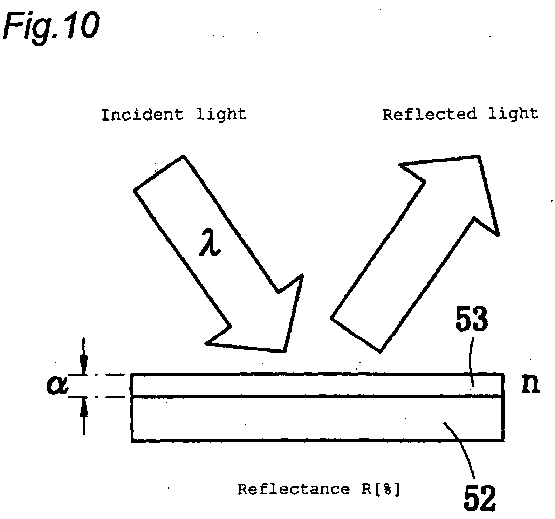

When a white light is made incident through the optical fiber 55 and the light projecting/receiving unit 54 to the substrate 52 on which the thin film 53 is formed, rays of light reflected from the front and rear surfaces of the thin film 53 interfere each other. As shown in Fig. 10, when light having a wavelength λ is made incident to the thin film 53 on the substrate 52, it is known that an interference waveform by the thin film 53 is expressed by the following Equation 1:

$$R = 1 - A/\{B + C \cdot \cos[(4\pi/\lambda)nd]\}: 1$$

Here, R[%] is a reflectance of the thin film 53. λ is a wavelength of an incident light. n is a refractive index of the thin film 53. d is a thickness of the thin film 53. A, B and C are constants determined by the refractive indices of the substrate 52 and the thin film 53.

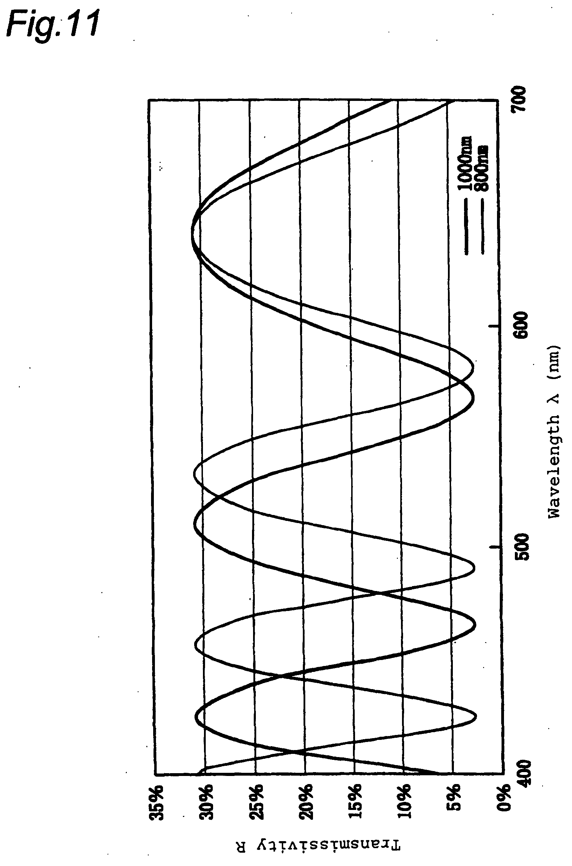

The optical filter 36 is constituted by forming an optical multilayer film 38 whose thickness is continuously changed on the transparent substrate 37. When light reflected from the thin film 53 is guided to the optical filter 36 via the light projecting/receiving unit 54 and the optical fiber 56 and is separated by the optical filter 36, optical spectrum measured by the light-receiving unit 39 such as CCD or the like is changed to a sinusoidal shape according to the above Equation 1 as a result. For example, in cases where the thickness of the thin film 53 is 800 nm and 1000 nm, the received light intensity is changed on the light-receiving unit 39 as shown in Fig. 11. The thickness of the thin film 53 can be obtained from a difference in the waveforms of the optical spectrum.

The arithmetic unit 57 for calculating the thin film 53 thickness from such an optical spectrum as shown in Fig. 11 is constituted by an A/D conversion unit 58 for converting an analog signal (each pixel signal column such as CCD or the like) outputted from the light-receiving unit 39 to a digital signal, an operation unit 59 for calculating the thin film 53 thickness based on measurement data digitized in the A/D conversion unit 58, a display unit 60 composed of a display or the like for displaying a thickness measurement result and an I/O unit 61 composed of a keyboard and RS232, a serial port, a parallel port or the like for inputting data for operation and outputting the film thickness measurement result.

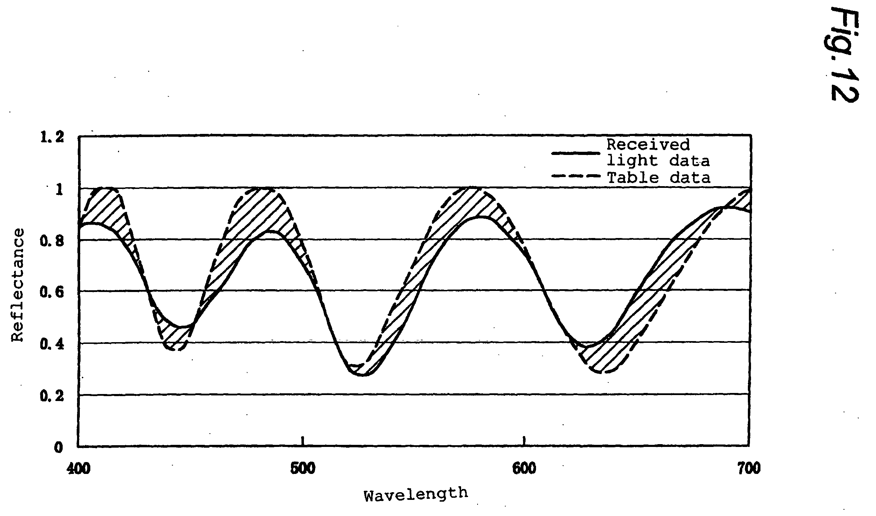

As a method of calculating a thickness in the operation unit 59, for example, a curve fitting method, a peak search method or the like can be employed. In the curve fitting method, as shown in Fig. 12, waveform data (table data) for each thickness measured in advance and stored as a table and measurement data of the received light are compared. The waveform data having the smallest margin of error against the received light data (that is, an area of a shaded portion in Fig. 12) is extracted by the least-squares method. The thickness of this waveform data is assumed as the thickness of the thin film 53 to be measured. In the peak search method, a thickness is obtained from a difference of wavelengths corresponding to a local maximum value and a local minimum value of the received light data. These are both common methods.

The curve fitting method will be described in detail below. When light having a wavelength λ is made incident to a thin film 53 having a thickness d and a refractive index n, the interference waveform (transmissivity R) is expressed by the following equation as described above (the above Equation 1). Here, constants A, B and C are determined by refractive indices of the substrate 52 and the thin film 53.

$$R = 1 - A/\{B + C \cdot \cos[(4\pi/\lambda)nd]\}: 1$$

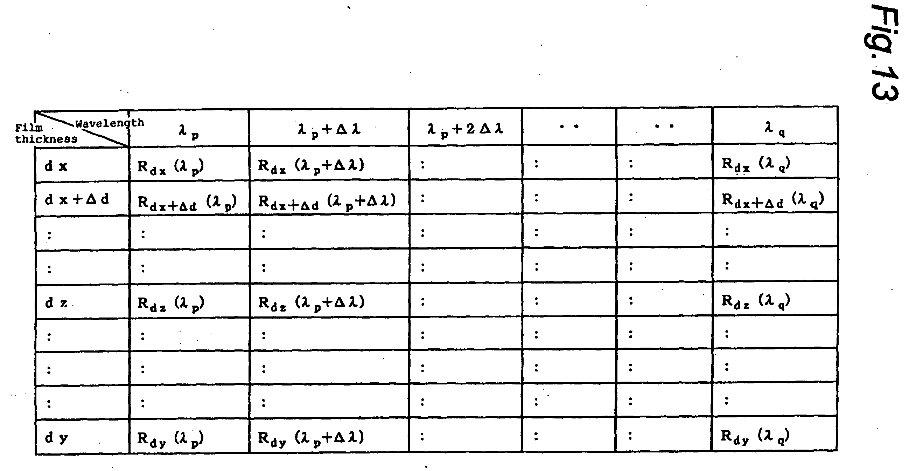

When information on the type of a thin film 53 to be measured, that is a refractive index n of the thin film 53 and values of constants A, B, C, is inputted from the I/O unit 61 such as a keyboard or the like in advance, the operation unit 59 calculates a value of reflectance R against each value of the thickness d and the wavelength λ by Equation 1 by changing the thickness d and the wavelength λ in determined units in a measured range. These values are stored as a table in a memory (not shown) in the operation unit 59. Fig. 13 shows an example of such a table. In this example, the unit in the measured thickness range from dx to dy is Δd = 1 nm. The unit in the wavelength range from λp to λq is Δλ = 10 nm.

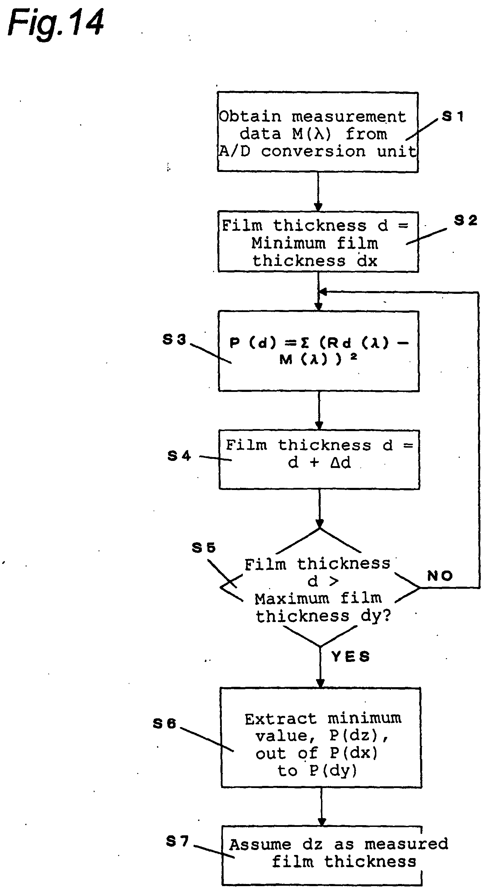

Subsequently, the curve fitting method is employed according to a processing flow shown in Fig. 14. When the operation unit 59 obtains digitized measured data (measurement data of transmissivity) M(λ) from the A/D conversion unit 58 (S1), calculation is started. First, the thickness d is assumed as a minimum thickness dx (S2). Square (Rdx(λ) - M(λ)]2 of a difference between the theoretical data Rdx(λ) of transmissivity in thickness d = dx and the measurement data M(λ) is calculated from the wavelength range λp to λq in units of Δλ (for example, 10 nm) by using a theoretical table in Fig. 13. The sum

$$P(dx) = \sum [Rdx(\lambda) - M(\lambda)]2$$

is obtained (S3) and stored in the memory.

Subsequently, the thickness d is increased by Δd (for example, 1 nm) (S4). Similarly, square [Rdx + 1 (λ) - M(λ)]2 of a difference of the theoretical data Rdx + Δd(λ) and the measurement data M(λ)in the thickness d = dx + Δd is calculated from the wavelength range λp to λq. The sum

$$P(dx + \Delta d) = \sum [Rdx + \Delta d(\lambda) - M(\lambda)]2$$

is obtained (S3) and stored in the memory.

Thus, as the thickness d value is increased successively by Δd until the thickness d reaches the maximum thickness dy (S5), squared-sum of a difference between theoretical data in the thickness and the measurement data at each time is obtained (S3) and stored in the memory.

Thus, when calculation of the squared-sums up to the maximum thickness dy is finished (when YES is selected in S5), a squared-sum P(dz) which is the minimum value out of squared-sums P(dx)-P(dy) in the thickness range dx-dy stored in the memory is extracted (S6) and the thickness dz at this time is assumed as a measurement thickness (S7).

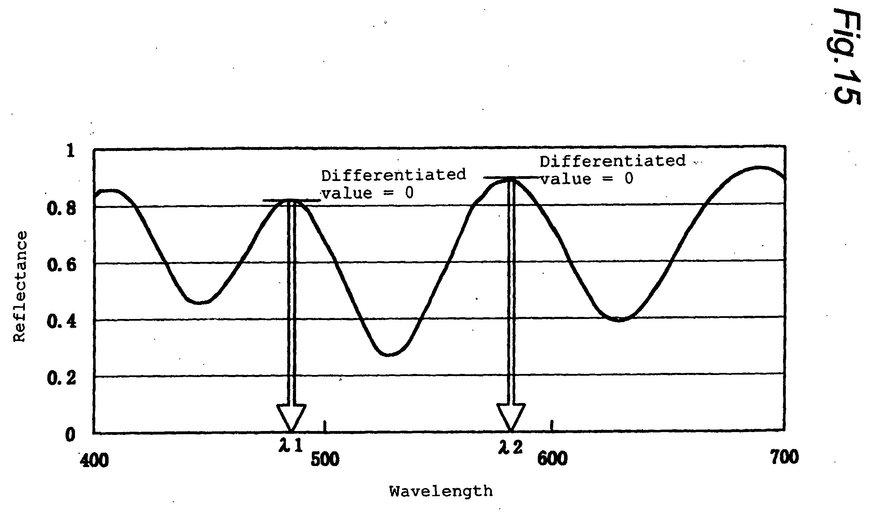

A method of calculating a thickness by the peak search method will be described below with reference to Fig. 15. In the peak search method, the operation unit 59 differentiates digitized measurement data outputted from the A/D conversion 58 and obtains a local maximum value from a position at which the differential value changes from positive to 0 (or negative) when wavelength λ is increased. When wavelengths corresponding to the thus obtained neighboring local maximum values are assumed as λ1, λ2 (however, λ1 < λ2) as shown in Fig. 15, it is known that the thickness d of this thin film 53 is expressed as

$$d = (\lambda 1 \times \lambda 2)/[2n(\lambda 2 - \lambda 1)]$$

by using the refractive index n of the thin film 53. Therefore, the thickness d can be obtained by giving the refractive index n of the thin film 53.

Or, the thickness d can be obtained by similar calculation by obtaining a local minimum value from a position at which the differential value changes from negative to 0 (or positive).

Since the light source device of the present invention can have uniform output (light emission) wavelength characteristics in a wide wavelength range, this light source device can be used in a film-thickness sensor. As compared with a halogen lamp, the life of the light source is longer and heat generation does not affect surrounding equipment. Since there is less change in light quantity and wavelength characteristics, the light source is stable.

When the light source device is constituted by semiconductor light-emitting elements, the emission wavelength range can be made wider. At the same time, the emission wavelength range of the light source device can be made wider or narrower or the emission wavelength range can be shifted by turning on (light emission) or off (no light) the semiconductor light-emitting elements. Therefore, the light source does not need to be replaced depending on the thickness to be measured unlike a case where a halogen lamp is used as a light source. The film thickness can be easily responded by turning on or off the semiconductor light-emitting element.

Furthermore, when a semiconductor light-emitting element giving a medium light-emitting wavelength range is turned off, part of the emission wavelength range is lost. Therefore, the same effect as a filter can be obtained by turning on or off the semiconductor light-emitting elements. Therefore, even when light having a specific wavelength is required to be cut depending on the kind of a thin film to be measured, this can be easily responded by turning off part of the semiconductor light-emitting elements. For example, when a thickness of a resist used in a process of manufacturing a semiconductor device is measured, light in a wavelength range of ultraviolet light needs to be cut so as to avoid sensitization of the resist. When a resist film is selected as an object to be measured on a setting screen of the display unit, by turning off the LED emitting a light in an ultraviolet light range (ultraviolet light of other LED is cut by a dichroic mirror), the resist film is irradiated with light not containing light in an ultraviolet light range. Therefore, the thickness can be measured without sensitizing the resist film.

Furthermore, since the arithmetic unit can easily obtain a light-emission state of the light source device (on or off state of the semiconductor light-emitting element) when wavelength characteristics of the light source device can be electrically controlled by turning on or off the semiconductor light-emitting element, measuring and setting conditions (for example, values of the aforementioned minimum thickness dx and maximum thickness dy, wavelength range λp-λq used'for theoretical data and the like) are automatically switched depending on the state of the light source device so that the thickness can be accurately calculated by an algorithm such as the curve fitting method or the like. Thus, the film-thickness sensor can be easily handled.

In this embodiment, a reflection-type film-thickness sensor measuring a thickness d by light reflected from a thin film is described, but a transmission-type film-thickness sensor measuring a thickness by light transmitted through the thin film may also be used.

## Claims

1.  A light source device comprising a plurality of semiconductor light-emitting elements having different output wavelength characteristics, an optical element for fetching a light in a partial wavelength range from each semiconductor light-emitting element and means for individually setting output power for each semiconductor light-emitting element, wherein

    rays of light fetched from the respective semiconductor light-emitting elements are overlapped and emitted.

2.  A spectroscope comprising the light source device according to Claim 1, a light-separating element for gradually changing a transmitted light wavelength depending on a transmitting- position and a plurality of light-receiving elements for segmentally receiving the light transmitted through the light-separating element.

3.  A film-thickness sensor comprising the light source device according to Claim 1, a light-separating element for gradually changing a transmitted light wavelength depending on a transmitting position and a plurality of light-receiving elements for segmentally receiving the light transmitted through the light-separating element, wherein

    light emitted from the light source device and reflected on or transmitted through a thin film is guided to the light-separating element, and a thickness of the thin film is obtained based on output of the light-receiving elements.

## Fig.1

Spectral characteristics of white LED (NSPW500)

## Fig.2

### PRIOR ART

## Fig.3

LED drive circuit — 17

11

13 Blue LED

12 White LED

15

14

LED drive circuit — 16

## Fig.4

Spectral characteristics of blue LED and white LED

*Fig.5*

**17**

**16**

```
LED drive
circuit
```

```
LED drive
circuit
```

**21**

**13** Blue LED

**12** White LED

**22** Red LED

**15**

```
LED drive
circuit
```

**23**

**14**

**24**

## Fig.6

Spectral characteristics of blue LED, white LED and red LED

- Transmissivity of dichroic mirror 14
- Output power
- Transmissivity of dichroic mirror 23

Wavelength (nm)

Output power (power ratio)

Transmissivity

*Fig.7*

## Fig.8

# Fig.9

## Fig.10

Incident light          Reflected light

$\lambda$

$\alpha$

53

n

Reflectance R[%]

52

## Fig.11

*Fig.12*

# Fig.13

| Film thickness / Wavelength | $\lambda_p$ | $\lambda_p+\Delta\lambda$ | $\lambda_p+2\Delta\lambda$ | . | .. | $\lambda_q$ |
|---|---|---|---|---|---|---|
| d x | $R_{dx}(\lambda_p)$ | $R_{dx}(\lambda_p+\Delta\lambda)$ | .. | .. | .. | $R_{dx}(\lambda_q)$ |
| d x+Δd | $R_{dx+\Delta d}(\lambda_p)$ | $R_{dx+\Delta d}(\lambda_p+\Delta\lambda)$ | .. | .. | .. | $R_{dx+\Delta d}(\lambda_q)$ |
| .. | .. | .. | .. | .. | .. | .. |
| .. | .. | .. | .. | .. | .. | .. |
| d z | $R_{dz}(\lambda_p)$ | $R_{dz}(\lambda_p+\Delta\lambda)$ | .. | .. | .. | $R_{dz}(\lambda_q)$ |
| .. | .. | .. | .. | .. | .. | .. |
| .. | .. | .. | .. | .. | .. | .. |
| .. | .. | .. | .. | .. | .. | .. |
| d y | $R_{dy}(\lambda_p)$ | $R_{dy}(\lambda_p+\Delta\lambda)$ | .. | .. | .. | $R_{dy}(\lambda_q)$ |

## Fig.14

```
          Obtain measurement
            data M(λ) from        S1
          A/D conversion unit
```

```
          Film thickness d =     S2
             Minimum film
             thickness dx
```

```
  S3      P (d) =Σ (Rd (λ) —
              M (λ) )²
```

```
  S4      Film thickness d =
              d + Δd
```

```
  S5        Film thickness
                 d >                NO
            Maximum film
            thickness dy?
```

```
              YES
```

```
  S6       Extract minimum
             value, P(dz),
             out of P(dx)
               to P(dy)
```

```
  S7    Assume dz as measured
             film thickness
```

## Fig.15

Differentiated value = 0

Differentiated value = 0

Reflectance

1

0.8

0.6

0.4

0.2

0

λ1

λ2

400 500 600 700

Wavelength

## INTERNATIONAL SEARCH REPORT

| International application No. |
| --- |
| PCT/JP00/04228 |

**A. CLASSIFICATION OF SUBJECT MATTER**
IPC CL.7 G01B11/06  G01J3/10  G01N21/01

According to International Patent Classification (IPC) or to both national classification and IPC

**B. FIELDS SEARCHED**

Minimum documentation searched (classification system followed by classification symbols)
IPC CL.7 G01B11/00-11/30  G01J3/00-3/52  G01N21/00-21/01,
21/17-21/61

Documentation searched other than minimum documentation to the extent that such documents are included in the fields searched
Jitsuyo Shinan Koho        1922-1996    Toroku Jitsuyo Shinan Koho  1994-2000
Kokai Jitsuyo Shinan Koho  1971-2000    Jitsuyo Shinan Toroku Koho  1996-2000

Electronic data base consulted during the international search (name of data base and, where practicable, search terms used)
JOIS(JICST)
WPI/L
EPAT

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 9-127424, A (Yokogawa Electric Corporation), 16 May, 1997 (16.05.97), Full text   (Family: none) | 1-3 |
| Y | WO, 97-35178, A (RINKE GUNTER; HARTIG CHRISTIAN), 25 September, 1997 (25.09.97), Full text & JP, 11-508053, A  & EP, 0886772, A | 1-3 |
| Y | JP, 57-69222, A (Ricoh Company, Ltd.), 27 April, 1982 (27.04.82), Full text   (Family: none) | 2 |
| Y | JP, 6-235660, A (NEC Corporation), 23 August, 1994 (23.08.94), Full text   (Family: none) | 2 |
| Y | JP, 3-41326, A (Matsushita Electric Ind. Co., Ltd.), 21 February, 1991 (21.02.91), Full text   (Family: none) | 2 |
| Y | JP, 64-57134, A (Minolta Camera Co., Ltd.), | 2 |

☒ Further documents are listed in the continuation of Box C.       ☐ See patent family annex.

| | |
| --- | --- |
| * Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier document but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 10 October, 2000 (10.10.00) | 17 October, 2000 (17.10.00) |
| Name and mailing address of the ISA/ Japanese Patent Office | Authorized officer |
| Facsimile No. | Telephone No. |

Form PCT/ISA/210 (second sheet) (July 1992)

**EP 1 111 333 A1**

## INTERNATIONAL SEARCH REPORT

International application No.

*PCT/JP00/04228*

| C (Continuation). DOCUMENTS CONSIDERED TO BE RELEVANT | | |
|---|---|---|
| Category* | Citation of document, with indication, where appropriate, of the relevant passages | Relevant to claim No. |
| | 03 March, 1989 (03.03.89),<br>Full text (Family: none) | |
| A | JP, 9-321335, A (OMRON CORPORATION),<br>12 December, 1997 (12.12.97),<br>Full text (Family: none) | 1-3 |
| Y | JP, 10-148511, A (Mitsubishi Heavy Industries, Ltd.),<br>02 June, 1998 (02.06.98),<br>Full text (Family: none) | 3 |
| Y | JP, 9-236404, A (Saitama Univ.),<br>09 September, 1997 (09.09.97),<br>Full text (Family: none) | 3 |
| Y | JP, 11-83457, A (YAZAKI CORPORATION),<br>26 March, 1999 (26.03.99),<br>Full text (Family: none) | 3 |
| P | JP, 11-260568, A (OMRON CORPORATION),<br>24 September, 1999 (24.09.99),<br>Full text (Family: none) | 1-3 |

Form PCT/ISA/210 (continuation of second sheet) (July 1992)